# EUROPÄISCHE PATENTSCHRIFT

(11) **EP 2 700 516 B1**
(45) Veröffentlichungstag und Bekanntmachung des Hinweises auf die Patenterteilung: **07.03.2018**
(21) Anmeldenummer: 13179557.7
(22) Anmeldetag: 07.08.2013
(51) Int. Cl.: B60D 1/06

(54) **Anhängekupplung**
Tow bar
Attelage

(30) Priorität: 20.08.2012 DE 202012103133 U
(43) Veröffentlichungstag der Anmeldung: 26.02.2014
(73) Patentinhaber: AL-KO Technology Austria GmbH, 6284 Ramsau im Zillertal (AT)
(72) Erfinder: Frank, Thomas, D-89129 Setzingen (DE); Hofhansl, Walter, D-86489 Unterbleichen (DE)
(74) Vertreter: Ernicke, Klaus Stefan

(56) Entgegenhaltungen:
- DE-A1- 4 303 164
- DE-U1-202005 011 444
- US-A- 4 209 184

## Beschreibung

Die Erfindung betrifft eine Anhängekupplung mit den Merkmalen im Hauptanspruch.

Eine solche Anhängekupplung ist aus der DE 20 2005 011 444 U1 bekannt. Sie weist ein Kupplungsgehäuse mit einem Bedienhebel, einem Schließbolzen, einer schwenkbaren Kugelschale und einem schwenkbaren Sicherungshebel auf, der eine Einrastsicherung bildet und mit dem Schließbolzen zusammenwirkt.

DE 43 03 164 offenbart eine Fahrzeug-Anhängerkupplung mit einer Reibungsbremse. Ein kugelabschnittsförmiger Teilabschnitt des Kugelkupplungsgehäuses wird durch ein Hydraulik-Spannelement mit Druck beaufschlagt. In einem Ausführungsbeispiel ist ein vertikal verschiebliches Keilspannelement vorgesehen, das in einer unteren Position eine Rückseite des drehbaren Hydraulik-Spannelements abstützt. Die Vorderseite des Hydraulik-Spannelements kann auf den Teilabschnitt wirken, um eine Kupplungskugel in der Fahrzeug-Anhängerkupplung einzuschließen und mit einer Reibkraft zu beaufschlagen. In der Drehstellung, die für den Schließ- und Verriegelungseingriff vorgesehen ist, ist das Keilspannelement durch eine Langlochführung mechanisch von dem Bedienhebel entkoppelt.

US 4 209 184 A offenbart eine Anhängekupplung für Fahrzeuganhänger mit einem drehbar gelagerten Spannbügel zum Einschließen eines Kugelkopfes. Der Spannbügel ist über einen Zughebel mit einem Betätigungshebel verbunden. Die Bewegung des Spannhebels ist aus der Bewegung des Betätigungshebels abgeleitet.

Es ist Aufgabe der vorliegenden Erfindung, eine weiter verbesserte Anhängekupplung aufzuzeigen.

Die Erfindung löst diese Aufgabe mit den Merkmalen im Hauptanspruch.
Die beanspruchte Anhängekupplung hat den Vorteil, dass Dank der in Öffnungsstellung frei und unabhängig vom Sicherungshebel und vom Schließbolzen schwenkbaren Kugelschale Scheinverriegelungen der Anhängekupplung zuverlässig vermieden werden können. Bei Kontakt mit einem Hindernis oder mit einer an falscher Stelle zugeführten Kupplungskugel kann die Kugelschale unabhängig vom Sicherungshebel und vom Schließbolzen ausweichen. Sie kann sich dabei auch vom Schließbolzen störungsfrei lösen. Der Sicherungshebel und der Schließbolzen bleiben unangetastet in ihrer Blockadestellung, so dass die Anhängekupplung nicht versehentlich schließen und verriegeln kann. Fehlbedienungen beim Ankuppeln und Irrtümer des Bedieners über den Ankupplungszustand können zuverlässig vermieden werden.

Die bei geöffneter Anhängekupplung frei drehbare Kugelschale wird beim korrekten Ankuppeln an einem Kugelkopf von diesem sicher mitgenommen und in eine für den Schließ- und Verriegelungseingriff vorgesehene Drehstellung gebracht, in der eine Beaufschlagung und Zuspannung durch den von einem Bedienhebel bewegten Schließbolzen erfolgen kann.

Eine konvexe Wölbung bzw. Rundung an der Unterseite des Schalenbodens hat den Vorteil einer Einweiser- und Führungsfunktion bei fehlerhafter Bedienung mit lose aufgelegter Anhängekupplung und anschließender Gespannfahrt. Die Anhängekupplung kann dabei automatisch geschlossen und der Kugelkopf in eine korrekte Einrastposition gebracht werden.

Eine rückwärtige gebogene Anlagekontur an der Kugelschale kann einerseits einen Anschlag zur Begrenzung der Drehbewegung in Öffnungsstellung am Schließbolzen bilden, wobei der restliche Konturenbereich durch den nach hinten überstehenden Sicherungshebel vom Schließbolzen distanziert ist und das vorerwähnte Ausweichen und Drehen der Kugelschale in Gegenrichtung bei Kollision mit einem Hindernis oder dergleichen ermöglicht. Die Kugelschale hat durch den Anschlag und die Federbelastung eine definierte Öffnungsstellung. Andererseits kann bei Ausfall des Sicherungshebels, z.B. durch Bruch oder dgl., die Anlagekontur mit dem federbelasteten Schließbolzen in stützenden und die Öffnungsstellung sichernden Eingriff treten. Hierdurch kann die Kupplungsfunktion erhalten bleiben.

Günstig ist außerdem die jeweils gabel- oder U-förmige Gestaltung von Kugelschale und Sicherungshebel und die gegenseitige Formanpassung. Dies erhöht die Stabilität und Blockade- sowie Auslösesicherheit des Sicherungshebels und erlaubt eine sichere Kontaktierung mit einer korrekt eintauchenden Kupplungskugel sowie die hiervon abgeleitete sichere Freigabe des Schließbolzens. Die alternative Ausführung mit einem stangenartigen Sicherungshebel kann entsprechendes leisten. Günstigerweise kann der Schließhebel auch mit einer Einrastanzeige kombiniert werden. Die Anzeigesicherheit wird verbessert und der Bauaufwand gemindert.

In den Unteransprüchen sind vorteilhafte Ausgestaltungen der Erfindung angegeben.

In einer Ausgestaltung sind die Kugelschale und der Sicherungshebel gleichachsig schwenkbar gelagert.

Die Kugelschale weist in einer Ausführung am rückwärtigen Endbereich eine oder mehrere obere Zuspann- und Nachstellflächen für die Anlage am Schließbolzen in Schließstellung auf. Sie kann außerdem am rückwärtigen Endbereich eine obere Sperrfläche für die Anlage am Schließbolzen in Teil-Öffnungsstellung aufweisen. Diese Merkmale sind bevorzugt kombiniert, wobei die Kugelschale alternativ nur die eine oder die andere dieser beiden Ausgestaltungen haben kann.

In einer Ausgestaltung ist der Sicherungshebel stangenförmig ausgebildet und im Freiraum der Kugelschale angeordnet. Dabei kann er durch oder über die Frontwand der Kugelschale greifen, was vorteilhaft, aber nicht zwingend ist.

Eine weitere Ausgestaltung sieht vor, dass der schwenkbare Bedienhebel ein Hebellager, Mitnehmer für den Schließbolzen und eine Sperrklinke aufweist. Die Anordnung einer Verschleißanzeige am Bedienhebel kann von Vorteil sein. Eine federbelastete Ausbildung von Bedienhebel und Sicherungshebel kann ebenfalls vorgesehen sein.

Die Erfindung ist in den Zeichnungen beispielsweise und schematisch dargestellt. Im Einzelnen zeigen:
- Figur 1:: eine Anhängekupplung und deren Teile in einer perspektivischen Explosivdarstellung,
- Figur 2 und 3:: eine Anhängekupplung in Öffnungsstellung in rückwärtiger Stirnansicht sowie im Längsschnitt,
- Figur 4 und 5:: die Anhängekupplung von Figur 1 bis 3 in Schließstellung in rückwärtiger Stirnansicht und im Längsschnitt,
- Figur 6 und 7:: eine geöffnete Anhängekupplung in einer ersten Kontaktstellung von Kugelschale und Kugelkopf in rückwärtiger Stirnansicht und im Längsschnitt,
- Figur 8 und 9:: eine andere Kontaktstellung bei geöffneter Anhängekupplung in Frontansicht und im Längsschnitt,
- Figur 10 und 11:: eine korrekte Eintauchstellung eines Kugelkopfs an einer geöffneten Anhängekupplung in rückwärtiger Stirnansicht und im Längsschnitt,
- Figur 12 und 13:: Seitenansichten der Kugelschale in verschiedenen Drehstellungen bei geöffneter Anhängekupplung und
- Figur 14 bis 16:: eine Variante der Anhängekupplung in verschiedenen Ansichten.

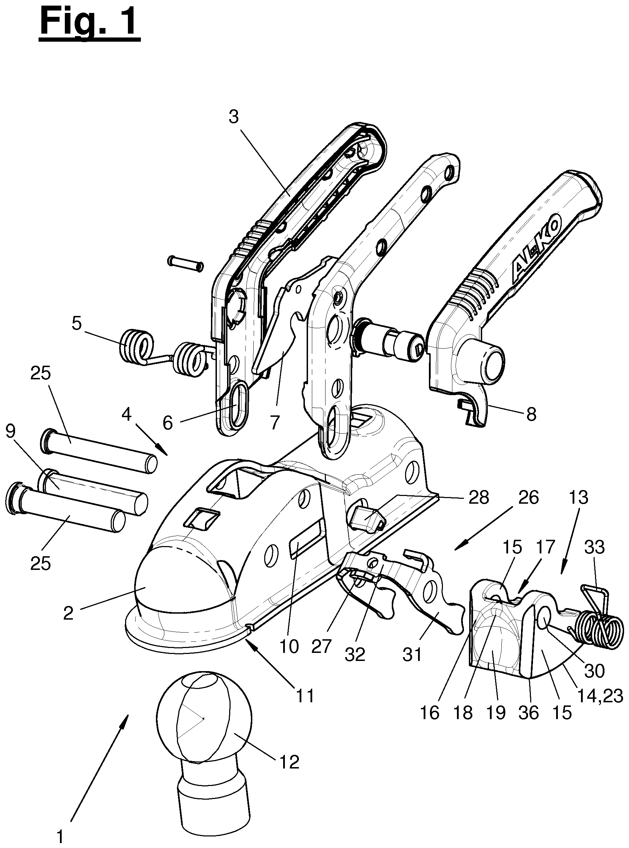

Die Erfindung betrifft eine Anhängekupplung (1) für Fahrzeuge (nicht dargestellt), insbesondere für Anhänger. Figur 1 bis 13 und 14 bis 16 zeigen verschiedene Kupplungsvarianten.

In Figur 1 sind eine solche Anhängekupplung (1) und deren Teile in einer perspektivischen Explosionsansicht dargestellt. Die Anhängekupplung (1) weist ein im Wesentlichen U-förmiges Kupplungsgehäuse (2) auf, welches in geeigneter Weise an einem frontseitigen Fahrzeugteil, z.B. an einer starren Deichsel oder an der Stange einer Auflaufeinrichtung eines Anhängers angeordnet und befestigt ist. Die Anhängerteile sind der Übersicht halber nicht dargestellt.

Das Kupplungsgehäuse (2) weist an der Vorderseite eine nach unten und nach hinten offene sowie in Formanpassung kalottenförmig gewölbte Aufnahmeöffnung (11) für einen Kugelkopf (12) einer Anhängekupplung an einem Zugfahrzeug (nicht dargestellt) auf. Das Kupplungsgehäuse (2) kann in diesem Bereich an der Oberseite eine Öffnung für die nachfolgend erläuterte Einrastanzeige (28) aufweisen.

Das Kupplungsgehäuse (2) weist ferner an der Oberseite eine Öffnung für ein Bedienorgan (3), insbesondere einen schwenkbaren Bedienhebel oder Kupplungshebel auf. Ferner sind Gehäuseöffnungen für ein Hebellager (4) des Bedienhebels (3) und für eine nachfolgend erläuterte Lagerung einer Kugelschale (13) und eines Sicherungshebels (26) vorhanden. In Figur 1 sind hierbei auch die zugehörigen und durchgesteckten Lagerstifte (25) gezeigt.

Ferner sind an den Seitenwänden des Kupplungsgehäuses zwei längs gerichtete Bolzenführungen (10) für einen Schließbolzen (9) angeordnet, die z.B. als Langlöcher mit parallelen axialen Lochrändern ausgebildet sind. Am rückwärtigen Bereich weist das Kupplungsgehäuse (2) an der Oberseite und den beiden Seitenwänden Öffnungen für die vorerwähnte Montage an einem Fahrzeugteil auf.

Die Anhängekupplung (1) besitzt eine Kugelschale (13), die beweglich, insbesondere schwenkbar, im Kupplungsgehäuse und am rückwärtigen Bereich der kalottenförmigen Aufnahmeöffnung (11) angeordnet ist. Die Kugelschale (13) wirkt in Schließstellung und beim Schließvorgang der Anhängekupplung (1) mit dem quer durchgesteckten Schließbolzen (9) zusammen, der seinerseits mit dem Bedienhebel (3) in einer Betätigungsverbindung steht. Die Anhängekupplung (1) weist ferner einen innenseitig angeordneten Sicherungshebel (26) auf. Der Sicherungshebel (26) wirkt mit dem Schließbolzen (9) zusammen und blockiert diesen bei geöffneter Anhängekupplung (1). Die Anhängekupplung (1) kann erst nach Lösen dieser Blockade geschlossen werden.

Die Kugelschale (13) und der Sicherungshebel (26) sind schwenkbar am Kupplungsgehäuse (2) gelagert. Vorzugsweise ist dies eine gleichachsige Lagerung auf einem gemeinsamen Lagerstift (25). Eine Feder (33) beaufschlagt den Sicherungshebel (26) und ggf. die Kugelschale (13). Die Lageröffnung an den seitlichen Gehäusewänden ist vorzugsweise am vorderen Bereich des Kupplungsgehäuses (2) und vor der Bolzenführung (10) angeordnet.

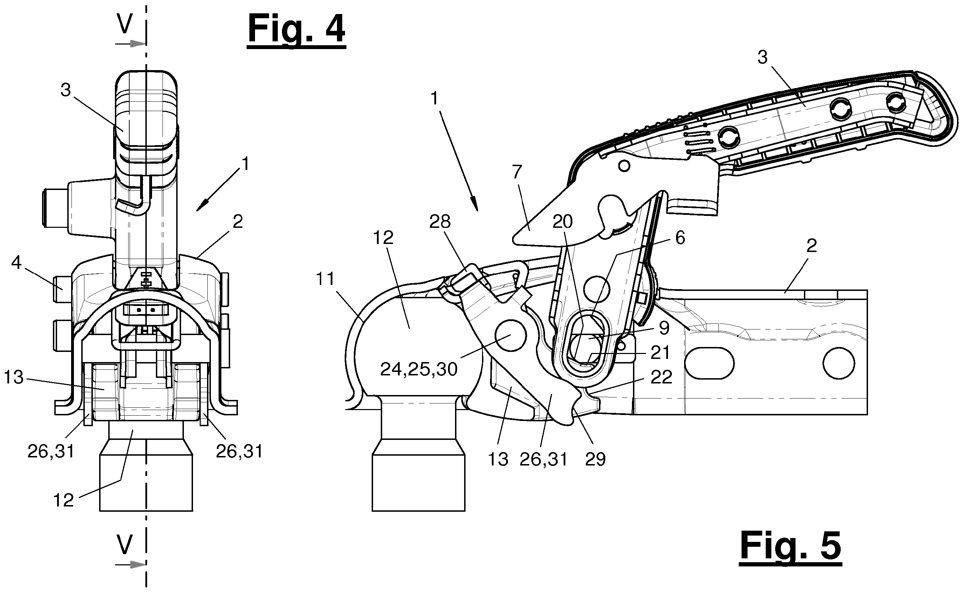

Die Kugelschale (13) weist eine Frontwand (16) mit einer frontseitigen konkaven Mulde (19) und einem darüber angeordneten Mitnahmeanschlag (18) auf. In der z.B. in Figur 4 und 5 gezeigten Schließstellung der Anhängekupplung (1) ist der Kugelkopf (12) formschlüssig in der gehäuseseitigen Aufnahmeöffnung (11) und in der Mulde (19) aufgenommen, wobei die Kugelschale (13) in dieser Schließstellung vom Schließbolzen (9) beaufschlagt und gegen den Kugelkopf (12) gespannt wird. Der Mitnahmeanschlag (18) sorgt dafür, dass die Kugelschale (13) in jeder Drehstellung von einem korrekt eintauchenden Kugelkopf (12) mitgenommen und in eine Position gebracht wird, die eine Beaufschlagung und Zuspannung durch den Schließbolzen (9) ermöglicht.

Wie Figur 1 und 9 sowie Figur 12 und 13 im Detail verdeutlichen, hat die Kugelschale (13) am rückwärtigen Stirnende eine Anlagekontur (22) für eine lösbare Anlage am Schließbolzen (9) in Öffnungsstellung der Anhängekupplung (1). Die Anlagekontur (22) hat eine schalenartig gebogene konkave Form. Sie bildet einerseits einen Anschlag für den Kontakt mit der Unterseite des Schließbolzens (9), der die Öffnungsdrehung der Kugelschale (13) begrenzt. In Gegenrichtung und in Schließrichtung erlaubt die Anlagekontur (22) eine freie Schwenkbewegung der Kugelschale (13) und ein ungehindertes Lösen vom Schließbolzen (9). In einer anderen Ausführungsform kann die Anlagekontur (22) einen leichten Klemmschluss mit dem Schließbolzen (9) in Anschlagstellung herstellen, der sich jedoch leicht lösen lässt.

Die Kugelschale (13) weist ferner am oberen rückwärtigen Endbereich eine oben liegende Zuspann- und Nachstellfläche (20) auf, die für die Anlage am Schließbolzen (9) in Schließstellung vorgesehen ist. Der vom Bedienhebel (3) betätigte Schließbolzen (9) gleitet hier auf und drückt beim Schließen der Anhängekupplung (1) die Kugelschale (13) in die in Figur 4 und 5 gezeigte Schließstellung. Die Zuspann- und Nachstellfläche (20) ist schräg zur Stellrichtung des Schließbolzens (9) ausgerichtet und erlaubt ein Nachstellen und Nachpressen bei im Durchmesser kleineren oder verschlissenen Kupplungskugeln bzw. Kugelköpfen (12).

Die Kugelschale (13) hat ferner am rückwärtigen Endbereich eine obere Sperrfläche (21), die eine schwache aufwärts gerichtete Neigung zum rückwärtigen Ende hin aufweist und für die Anlage am Schließbolzen (9) in einer Teil-Öffnungsstellung der Anhängekupplung (1) sorgt. Die Sperrfläche (21) sorgt dafür, dass eine teilweise geöffnete Anhängekupplung (1) sich nicht versehentlich oder von allein ohne Betätigung des Bedienhebels (3) öffnen und abkuppeln kann.

Die Kugelschale (13) weist ferner an ihrem Schalenboden (14) eine nach unten gerichtete konvexe Abrundung (23) auf. Der Übergang des gerundeten Schalenbodens (14) in die aufrechte Frontwand (16) ist als Rundkante (36) ausgebildet. Figur 1, 3, 7, 9, 12, 13 und 15 zeigen diese Ausgestaltung.

Wie ferner aus Figur 1 ersichtlich ist, hat die Kugelschale (13) eine Gabelform, die gebildet wird von einer aufrechten Frontwand (16), einem unteren und nur über eine Teillänge der Kugelschale (13) reichenden Schalenboden (14) sowie beidseitigen Schalenarmen (15), die über die gesamte Länge reichen und die zusammen mit der Frontwand (16) einen Freiraum (17) umschließen. In diesem Freiraum (17) kann eine in Figur 1 dargestellte Feder (33) aufgenommen werden. Die seitlichen Schalenarme (15) weisen am vorderen Bereich jeweils eine Lageröffnung (24) für den Lagerstift (25) und am hinteren Endbereich die vorerwähnte Anlagekontur (22), Sperrfläche (21) und Spann- sowie Nachstellfläche (20) auf.

Der als gebogenes dünnwandiges Blechteil ausgebildete Sicherungshebel hat ebenfalls eine Gabel- oder U-Form. Er besteht aus einem quer vor der Kugelschale (13) angeordneten Hebelarm (32) sowie zwei längsgerichteten und beidseits außenseitig an der Kugelschale (13) vorbeigreifenden Hebelarmen (31). Die Hebelarme (31) tragen Lageröffnungen (30) für den Lagerstift (25) und haben am rückwärtigen, vorzugsweise stirnseitigen Ende, eine formschlüssige Bolzenaufnahme (29), die sich selbst am Schließbolzen (9) verriegeln kann. Am vorderen Ende und am querliegenden Hebelarm (32) hat der Sicherungshebel (26) einen vorspringenden Auslöser (27), der in die Aufnahmeöffnung (11) ragt und von dem eintauchenden Kugelkopf (12) mitgenommen wird, wobei der Sicherungshebel (26) schwenkt und sich aus der Schließ- und Eingriffsstellung mit dem federbelasteten Schließbolzen (9) löst. Der Auslöser (27) kann eine verschleißgünstige Kugelschalenform haben. Figur 5 zeigt diese Schließhebelstellung.

Am vorderen Ende bzw. am Querarm (32) weist der Sicherungshebel (26) außerdem eine nach oben gerichtete und ggf. farblich abgesetzte Einrastanzeige (28) auf, die in Schließstellung durch die vorerwähnte obere Gehäuseöffnung ragt. Sie ist dabei von außen sichtbar und signalisiert z.B. durch Position und Farbe die korrekte Einnahme der Schließstellung. In dieser Stellung gemäß Figur 5 befinden sich die längsgerichteten Hebelarme (31) unterhalb des Schließbolzens (9) und unterhalb der Spann- und Nachstellfläche(n) (20).

Der Sicherungshebel (26) umgreift mit seinen dünnen aufrechten Hebelarmen (31,32) vorn und seitlich die Kugelschale (13), die sich dabei frei und unabhängig vom Sicherungshebel (26) und seiner Hebelstellung drehen kann.

Der Schließbolzen (9) ist mit dem Bedienhebel (3) über Mitnehmer (6), z.B. in Form von schräg gerichteten Langlöchern, formschlüssig verbunden. Der durchgesteckte Schließbolzen (9) ist an den aufrechten Langlochrändern geführt und wird bei einer Schwenkbewegung des Bedienhebels (3) über das hochliegende Hebellager (4) mitgenommen und je nach Hebeldrehrichtung in der Bolzenführung (10) vor- und zurückgeschoben.

Der Bedienhebel (3) kann z.B. gemäß Figur 1 einteilig oder mehrteilig ausgebildet sein, wobei er z.B. aus mehreren, seitlich zusammengefügten Schalenteilen besteht, welche am unteren und vorzugsweise geraden Hebelende die besagten Langlöcher (6) und am oberen Hebelende ein Griffteil aufweisen sowie ggf. ein in Figur 1 dargestelltes Schloss aufnehmen. Am Bedienhebel (3) ist ferner eine federbelastete Sperrklinke (7) angeordnet, die mit ihrer Klinkennase nach vorne über den Hebelrand ragt und mit einer Öffnung an der Gehäuseoberseite zusammenwirkt. Sie verhindert ein versehentliches Öffnen der Anhängekupplung (1) und kann erst in die besagte Öffnung eintauchen, wenn ein Bediener sie gegen die Federkraft einklappt und den Bedienhebel (3) dreht. Der Bedienhebel (3) kann ferner eine Verschleißanzeige (8) an der Rückseite aufweisen. Diese kann z.B. je nach verschleißabhängiger Zuspann- und Drehstellung des Bedienhebels (3) eine Farbmarkierung oder dgl. an einem gebogenen Markierungsträger zeigen.

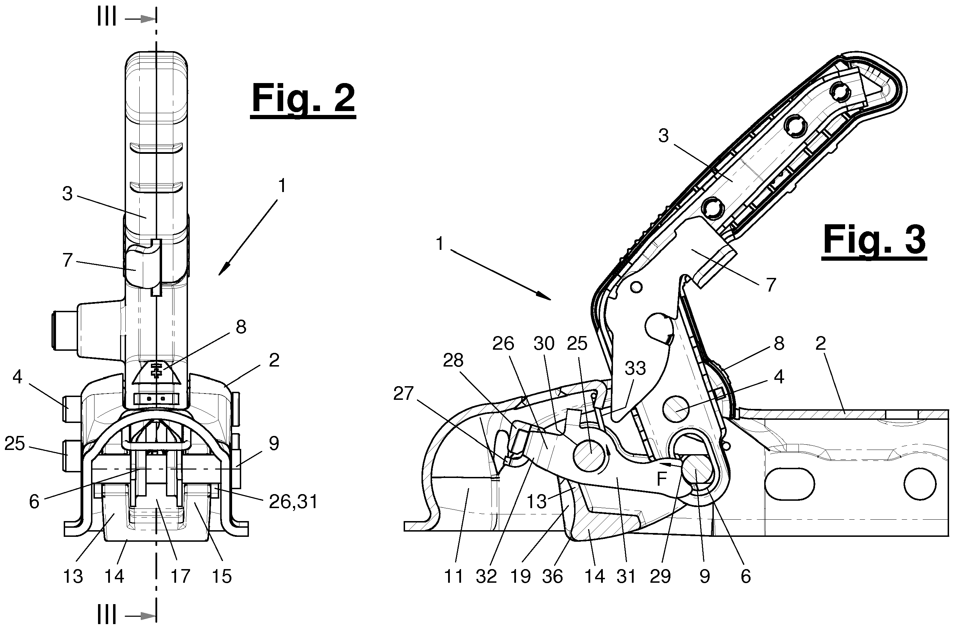

Wie Figur 1 verdeutlicht, sind Federn (5,33) vorhanden, die den Bedienhebel (3) und den Schließbolzen (9) sowie den Sicherungshebel (26) und ggf. die Kugelschale (13) beaufschlagen. Die obere und dem Bedienhebel (3) sowie dem Schließbolzen (9) zugeordnete Feder (5) stützt sich am Kupplungsgehäuse (2) ab und wirkt in Schließrichtung der Anhängekupplung (1), wobei sie den Bedienhebel (3) und den Schließbolzen (9) nach vorn zur Aufnahmeöffnung (11) drängt. Die Feder (33) versucht den Sicherungshebel (26) und die Kugelschale (13) in eine Öffnungsstellung zu bewegen, wobei dieser Weg durch einen Anschlag im Zusammenwirken mit dem Schließbolzen (9) begrenzt wird. Figur 3 zeigt die Öffnungsstellung mit der in dieser Seitenansicht gegen den Uhrzeigersinn um die Stiftachse (25) gerichteten und durch einen Pfeil symbolisierten drehenden Federwirkung.

Wie Figur 3 verdeutlicht, hat die Bolzenaufnahme (29) am Sicherungshebel (26) die Form einer schalenförmigen Rastöffnung mit einer an den Schließbolzen (9) angepassten Kontur. Die Bolzenaufnahme (29) umgreift formschlüssig einen Teilbereich der vorderen Bolzenwand oberhalb und unterhalb der Mittelachse des Schließbolzens (9). Der formschlüssige Eingriff hält den Sicherungshebel (26) bei geöffneter Anhängekupplung (1) in der gezeigten Öffnungsstellung, in welcher der Auslöser (28) in die Aufnahmeöffnung (11) ragt.

Der obere gekrümmte Konturenrand liegt knapp oberhalb der Mittelachse des Schließbolzens (9) und bildet hierdurch eine formschlüssige Verriegelung. Die vom federbelasteten Schließbolzen (9) ausgeübte und an der Kontaktstelle zur Bolzenaufnahme (29) entstehende Normalkraft F verläuft außerdem oberhalb des Sicherungshebellagers (25) und sichert die sperrende formschlüssige gegenseitige Lage von Sicherungshebel (26) und Schließbolzen (9). In dieser in Figur 3 gezeigten Öffnungsstellung wird der Schließbolzen (9) vom Sicherungshebel (26) festgehalten und kann sich nicht nach vorn in seine Schließstellung und in einen beaufschlagenden Kontakt mit der Nachstellfläche (20) der Kugelschale (13) bewegen. Eine Freigabe ist erst möglich, wenn ein korrekt eintauchender Kugelkopf (12) am Auslöser (27) anschlägt und bei Betätigung des Bedienhebels den Hebel- und Bolzeneingriff löst, so dass dann die Schließstellung gemäß Figur 5 eingenommen werden kann. Der Sicherungshebel (26) verhindert in der in Figur 3 gezeigten Öffnungsstellung außerdem, dass der Bedienhebel (3) abwärts geschwenkt und die Kupplung geschlossen wird.

Wie Figur 1, 12 und 13 verdeutlichen, ist die Kugelschale (13) in Öffnungsstellung der Anhängekupplung (1) frei schwenkbar um den Lagerstift (25), wobei sie sich außerdem frei und unabhängig vom Sicherungshebel (26) und vom Schließbolzen (9) bewegen kann. Insbesondere hat die Kugelschale (13) bei einer solchen Schwenkbewegung keine Mitnahmefunktion für den Sicherungshebel (26) und den Schließbolzen (9). Sie kann sich vielmehr frei drehen, ohne dass hierdurch eine Betätigung und ein versehentliches Schließen der Anhängekupplung (1) erfolgt. Der Sicherungshebel (26) und der Schließbolzen (9) behalten die in Figur 3 gezeigte Blockadestellung. Andererseits hat die Kugelschale (13) dank der Anlagekontur (22) und der Federbeaufschlagung eine definierte Offenstellung.

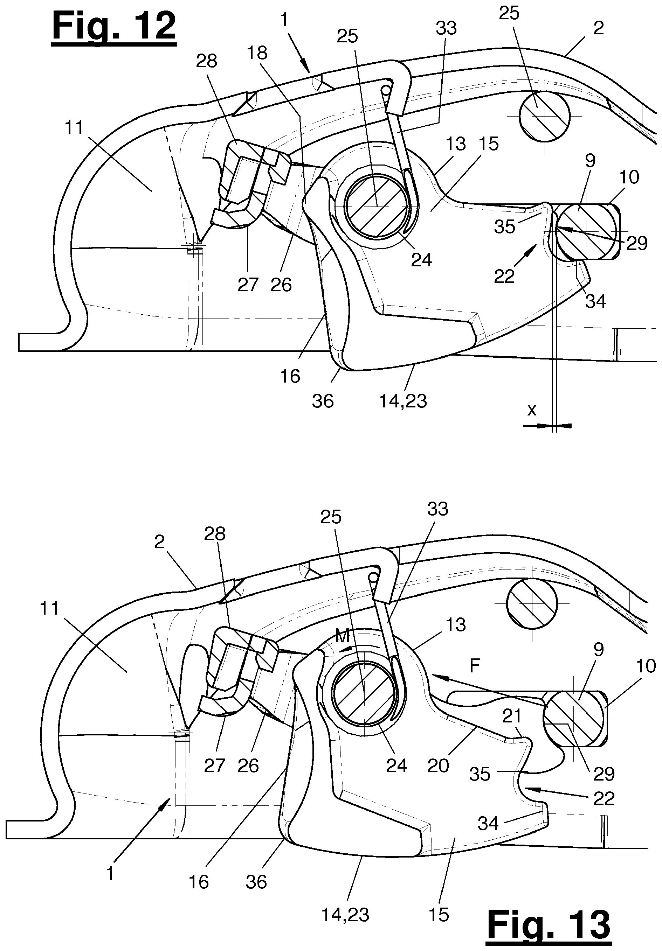

Wie Figur 12 und 13 verdeutlichen, wird die freie Drehbarkeit der Kugelschale (13) durch eine Längenabstimmung von Kugelschale (13) und Sicherungshebel (26) und deren hinteren Bereichen erreicht. Der Sicherungshebel (26) ragt in der Öffnungsstellung nach hinten ein Stück über die Kugelschale (13) und deren Schalenarme (15) hinaus. Hierdurch schlägt die Anlagekontur (22) an der Kugelschale (13) bzw. an deren Schalenarmen (15) nur an der Unterseite des Schließbolzens (19) an und ist ansonsten nach vorn um eine Strecke (x) so weit vom Schließbolzen (9) distanziert, dass die erwähnte freie Drehbewegung in der Öffnungsstellung möglich ist. Figur 2 zeigt die mittels der Feder (33) definierte Öffnungs- und Anschlagstellung am Schließbolzen (9). Figur 13 zeigt eine andere Drehstellung, welche die Kugelschale (13) bei geöffneter Anhängekupplung (1) einnehmen kann.

Figur 12 und 13 verdeutlichen auch die Ausbildung der Anlagekontur (22). Sie hat eine schalenartig gebogene konkave Form und besitzt einen unteren, nach hinten vorspringenden Konturenabschnitt oder Anschlagbereich (34) sowie einen oberen Konturenabschnitt oder Schalenbereich (35). Der untere Anschlagbereich (34) springt so weit nach hinten vor, dass er in Öffnungsstellung gemäß Figur 12 an der Unterseite des Schließbolzens (9) anliegt. Der obere Konturenabschnitt (35) wird in Öffnungsstellung von einem intakten Sicherungshebel (26) so weit um die Strecke (x) vom Schließbolzen (9) distanziert, dass die besagte freie Schwenkbewegung möglich ist.

Andererseits hat der obere Konturenabschnitt (35) eine Schalenform, die bei einem Bruch oder einem anderen Ausfall des Sicherungshebels (26) mit dem dann von seiner Feder (5) weiter nach vorn geschobenen Schließbolzen (9) in formschlüssigen Eingriff treten kann. Die Schalenform ist dabei so gewählt, dass der obere Schalenbereich den Schließbolzen (9) bereichsweise formschlüssig umgreift und abstützt sowie ein die Öffnungsstellung sicherndes Stützmoment (M) entwickelt. Hierbei entsteht an der Kontaktstelle mit dem Schließbolzen (9) eine resultierende Normalkraft (F), die oberhalb der Stift- und Lagerachse (25) verläuft.

Die Ausbildung des oberen Konturenabschnitts bzw. Schalenbereichs (35) der Anlagekontur (22) und die Ausbildung der gebogenen Bolzenaufnahme bzw. Rastöffnung (29) am Sicherungshebel (26) können gleichartig ausgebildet sein. In Figur 12 und 13 ist das Zusammenwirken mit dem Schließbolzen (9) anhand der Bolzenaufnahme (29) dargestellt und gilt entsprechend auch für die Anlagekontur (22) beim vorgenannten Versagensfall des Sicherungshebels (26).

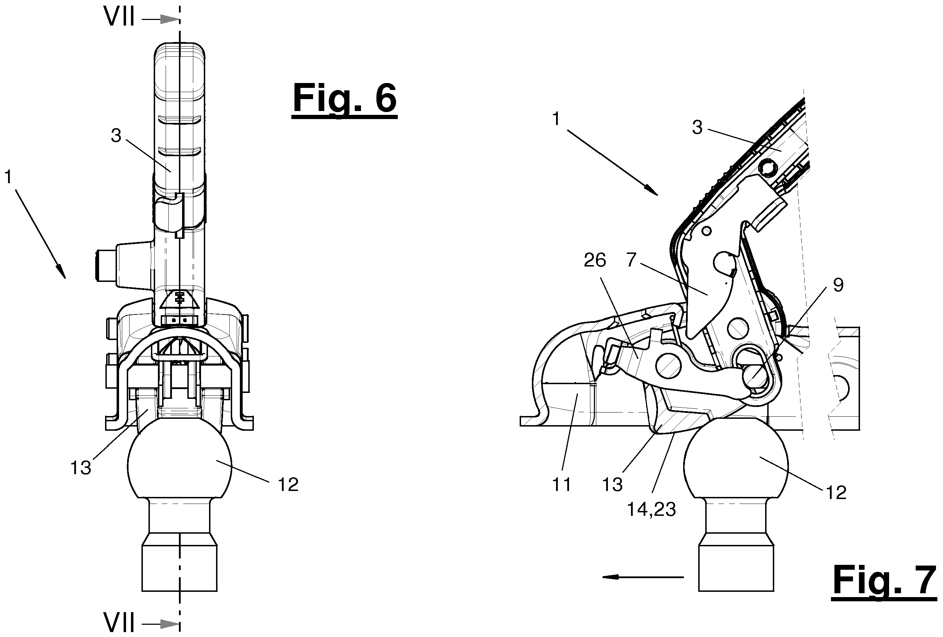

Die Anhängekupplung (1) mit der frei drehbaren und in der vorbeschriebenen Weise gestalteten Kugelschale (13) hat bei einer Fehlbedienung positive sicherheitstechnische Auswirkungen, die nachfolgend anhand von Figur 6 bis 11 dargestellt und beschrieben werden.

Figur 6 und 7 zeigen eine erste Kollisionssituation, in der bei einer Fehlbedienung die Anhängekupplung (1) zu weit über den Kugelkopf (12) geschoben wird und nicht einrastet. Hierbei kontaktiert die Kugelschale (13) mit ihrem gewölbten Schalenboden (14) hinter dem Lager (25) den Kugelkopf (12). Sie wird dadurch mit ihrer rückwärtigen Anlagekontur (22) bzw. dem Anschlagbereich (34) gegen den Schließbolzen (9) gedrückt und dort abgestützt, wobei der Schließbolzen (9) seine Stellung behält und nicht ausweicht. Eine solche Kollision hat somit keinerlei Auswirkungen auf die gezeigte Öffnungs- und Blockadestellung mit dem gegenseitigen formschlüssigen Eingriff von Sicherungshebel (26) und Schließbolzen (9). Die Anhängekupplung (1) kann in dieser Position trotz Betätigung des Bedienhebels (3) und gelöster Sperrklinke (7) nicht verriegelt werden. Der Blockadeeingriff von Sicherungshebel (26) und Schließbolzen (9) bleibt erhalten.

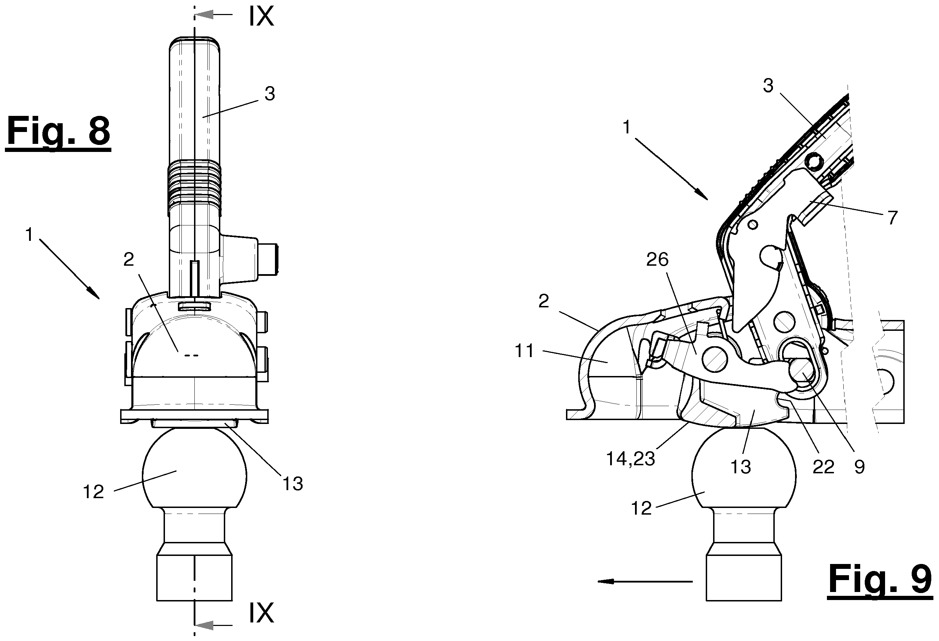

Figur 8 und 9 zeigen eine andere Kollisionssituation, in der der Kugelkopf (12) die Kugelschale (13) am gewölbten (23) Schalenboden (14) weiter vorn oder mit einer ggf. vorwärts gerichteten Bewegungskomponente kontaktiert. Die Kugelschale (13) wird dabei frei drehend mitgenommen und aus der Anschlagstellung am Schließbolzen (9) gelöst, ohne dass die formschlüssige Blockadestellung zwischen Sicherungshebel (26) und Schließbolzen (9) negativ tangiert wird. Die Kugelschale (13) kann eine Ausweichbewegung ohne negativen Einfluss auf die Anhängekupplung (1) ausführen. Sie kann dabei den Zugang zur Aufnahmeöffnung (11) verengen und eine Sicherungs- und Sperrfunktion für den Kugelkopf (12) haben. Der Kugelkopf (12) kann bei manueller falscher Positionierung nirgends an der Anhängekupplung einrasten und fälschlicherweise eine Kupplungs- und Verriegelungsstellung suggerieren. Die Blockadestellung von Sicherungshebel (26) und Schließbolzen (9) wird nicht aufgehoben. Wenn die Kollision beendet ist, dreht die Feder (33) die Kugelschale (13) wieder zurück in die Anschlagstellung am Schließbolzen (9).

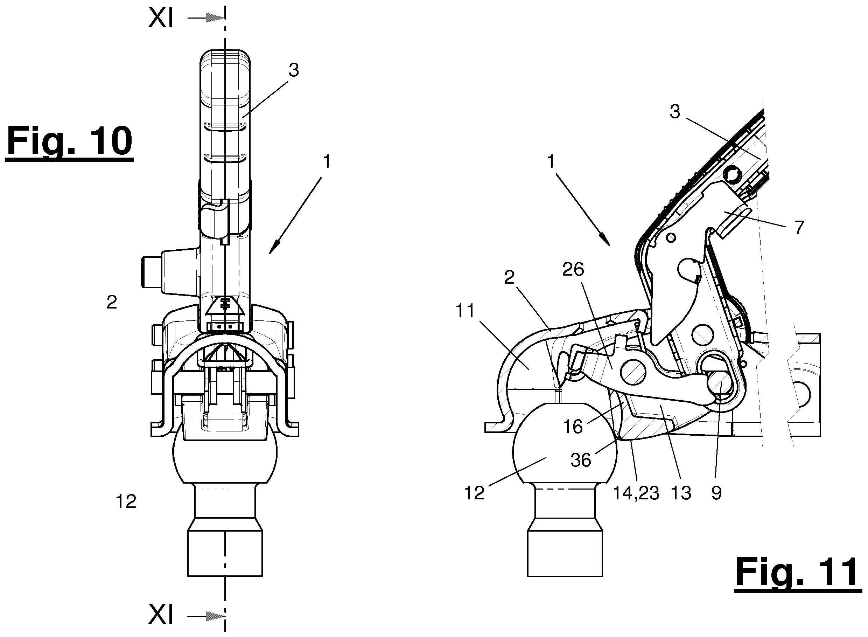

Figur 10 und 11 zeigen eine korrekte Ankuppelstellung, in welcher der Kugelkopf (12) die richtige Ankuppelposition unterhalb der Aufnahmeöffnung (11) und der in Anschlagstellung befindlichen Kugelschale (13) einnimmt. Bei Aufsetzen der Anhängekupplung (1) und beim Eintauchen des Kugelkopfs (12) in die Aufnahmeöffnung (11) erfolgen eine Mitnahme des Sicherungshebels (26) und ein Lösen der Blockadestellung, so dass der Bedienhebel (3) gedreht und die Anhängekupplung (1) geschlossen und zugespannt werden kann.

Die vorstehenden Erläuterungen zu den Figuren 6 bis 11 betreffen statische Situationen, in denen ein Bediener die Anhängekupplung (1) und das Kupplungsgehäuse (2) an einem stehenden Fahrzeug und ruhenden Kugelkopf (12) ggf. falsch positioniert und aufsetzt.

Daneben gibt es noch eine andere Situation, in der die frei drehbare Kugelschale (13) eine positive Wirkung mit einer Sicherungs- und Einweisefunktion hat. Wenn bei einer Fehlbedienung die Anhängekupplung (1) gemäß Figur 7 nur auf den Kugelkopf (12) lose aufgelegt wird und das Zugfahrzeug anschließend losfährt, was durch den Pfeil symbolisiert ist, drückt die Auflagelast die Kugelschale (13) mit dem Schalenboden (14) und der Abrundung (23) gegen den Kugelkopf (12). Dank der verkürzten Schalenbodenlänge und der nach unten ausbauchenden Abrundung (23) besteht Formschluss mit dem Kugelkopf (12), wodurch bei der Fahrt die ausweichfähige Kugelschale (13) in die Position von Figur 9 geschwenkt wird. Bei der Fahrt gleitet der Kugelkopf (12) an der Abrundung (23) entlang und über deren Scheitel hinweg. Sobald er am vorderen Ende des Schalenarms (15) und insbesondere des dortigen gerundeten Übergangs (36) in die Frontwand (16) angekommen ist, drückt er die schwenkbare Kugelschale (13) zurück in die Öffnungsstellung, wodurch der Zugang zur Aufnahmeöffnung (11) freigegeben wird und der Kugelkopf (12) hier eintauchen kann. Figur 9 verdeutlicht diese Position. Beim Eintauchen kontaktiert der Kugelkopf (12) den Auslöser (27), wobei durch die Anhängelast die Kraft so groß ist, dass die Bolzenaufnahme (29) aus dem Eingriff mit dem Schließbolzen (9) schnappt, wodurch die Blockadestellung aufgehoben wird und der von Federkraft vorgeschobene Schließbolzen (9) die Kugelschale (13) spannt und die Anhängekupplung (1) schließt. Der Bedienhebel (3) wird dabei mitgenommen. Der Bedienfehler mit der lose aufgelegten Anhängekupplung (1) kann dadurch bei der Fahrt dank der schwenkbaren Kugelschale (13) und ggf. ihrer Abrundung (23) selbsttätig behoben und die Anhängekupplung (1) automatisch eingerastet und geschlossen werden.

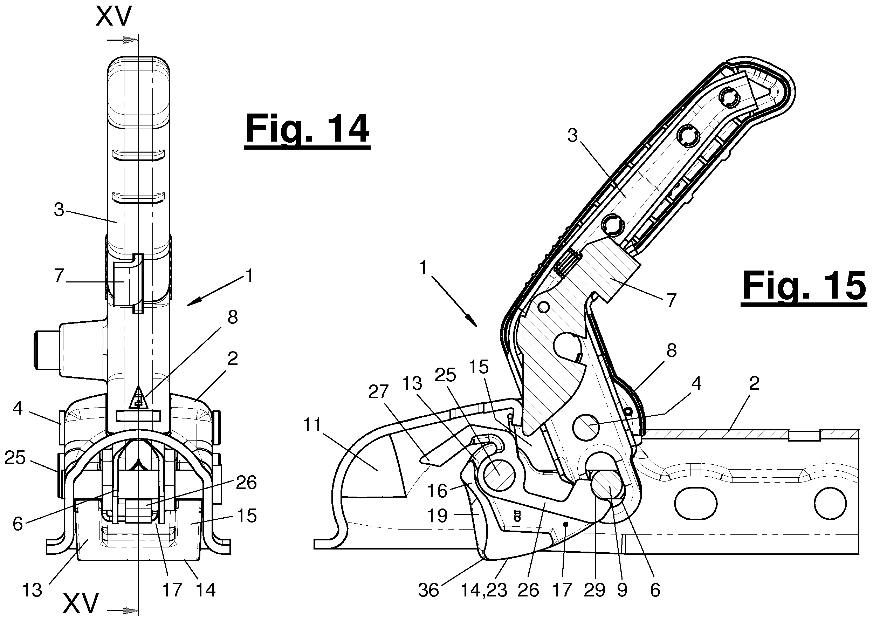

Figur 14 bis 16 zeigen eine Variante der Anhängekupplung (1) die sich vom Ausführungsbeispiel der Figuren 1 bis 13 durch die Gestaltung und gegenseitige Zuordnung der Kugelschale (13) und des Sicherungshebels (26) unterscheidet. Die anderen Kupplungskomponenten können die gleichen wie im ersten Ausführungsbeispiel sein und haben gleiche Bezugsziffern.

Der Sicherungshebel (26) ist in diesem Ausführungsbeispiel stangenartig oder einarmig ausgebildet und ist innerhalb des Freiraums (17) der Kugelschale (13) zwischen den Schalenarmen (15) untergebracht. Die Kugelschale (13) und insbesondere deren Frontwand (16) kann dadurch eine größere Breite als im ersten Ausführungsbeispiel haben.

Die Kugelschale (13) und der Sicherungshebel (26) sind auch in diesem Ausführungsbeispiel gleichachsig und gemeinsam auf dem Lagerstift (25) gelagert. Der Sicherungshebel (26) hat am hinteren Ende die Bolzenaufnahme (29) und kann im Armbereich davor wie im ersten Ausführungsbeispiel eine Einbuchtung für den Freigang des Bedienhebels (3) haben. Der vordere Teil des Sicherungshebels (26) besitzt in der zweiten Variante eine abgekröpfte Form und greift über oder durch den oberen Rand der Frontwand (16) der Kugelschale (13). Das vordere Armende weist auch einen Auslöser (27) auf.

Figur 14 zeigt die zweite Variante in Rückansicht, wobei Figur 15 den zugehörigen Längsschnitt gemäß Schnittlinie XV-XV darstellt. In beiden Figuren ist die Öffnungsstellung der Anhängekupplung (1) mit dem in die Aufnahmeöffnung (11) ragenden Auslöser (27) dargestellt. Bei der zweiten Variante ist die Kugelschale (13) ebenfalls frei oder ggf. unter rückstellender Einwirkung einer Feder drehbar um den Lagerstift (25) gelagert und weist am rückwärtigen Ende eine Anlagekontur (nicht dargestellt) auf, die in Öffnungsstellung am Sperrbolzen (9) anschlägt und andererseits in Kupplungslängsrichtung durch den nach hinten überstehenden Sicherungshebel (26) vom Sperrbolzen (9) distanziert ist.

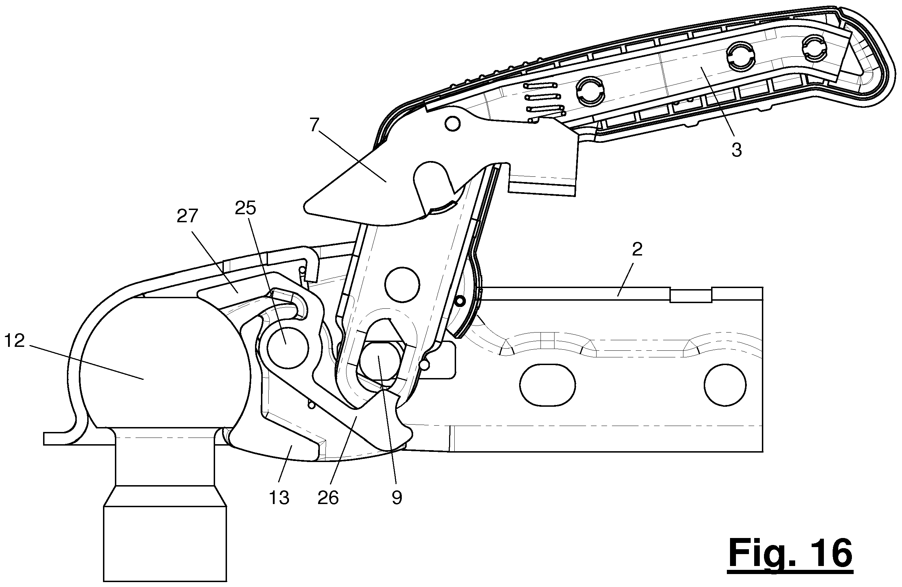

Figur 16 zeigt die Schließstellung der Anhängekupplung (1). Bei der hier gezeigten zweiten Variante schwenkt dabei der vordere Teil des Sicherungshebels (26) mit dem Auslöser (27) in einen Freiraum im oberen Bereich des Kupplungsgehäuses (2). Bei dieser zweiten Variante wird auf eine Einrastsicherung verzichtet oder diese wird in anderer Weise und unabhängig vom Sicherungshebel (26) ausgebildet.

In der zweiten Variante haben die drehbare Kupplungsschale (13) und der Sicherungshebel (26) die gleiche Funktion wie beim ersten Ausführungsbeispiel. Sie können auch die vorbeschriebene Sicherheits- und Einweiserfunktion gemäß Figur 6 bis 11 haben.

Abwandlungen der gezeigten und beschriebenen Ausführungsformen sind in verschiedener Weise möglich. Der Schließbolzen (9) kann ggf. am Bedienhebel (3) fest angebracht sein. Die Kugelschale (13) und der Sicherungshebel (26) können eine andere angepasste Formgebung und andere Lagerungen haben, wobei die vorbeschriebenen Funktionen und die Entkopplung der Kugelschale (13) vom Schließbolzen (9) und vom Sicherungshebel (26) in Öffnungsstellung der Kupplung (1) erhalten bleibt. Die Anlagekontur (22) an der Kupplungsschale (13) kann L-förmig oder in anderer Weise ausgeformt sein, wobei auf den formschlüssigen Eingriff am Schließbolzen (9) bei Ausfall des Sicherungshebels (26) verzichtet wird.

Die Gestaltung des Sicherungshebels (26) und die dortigen Anordnung der Einrastsicherung (28), z.B. gemäß des ersten Ausführungsbeispiels, haben eigenständige erfinderische Bedeutung und können auch bei konventionellen Anhängekupplungen (1) mit anderer, z.B. nicht frei drehbarer Kugelschale und anderer Schließmechanik, z.B. gemäß der DE 195 33 202 A1 oder DE 20 2005 011 444 U1, eingesetzt werden. Auch der Sicherungshebel (26) der zweiten Variante von Figur 14 bis 16 lässt sich ggf. mit einer Einrastsicherung ausrüsten.

Ein Sicherungshebel (26) mit den Merkmalen von Anspruch 11 und/oder 12 und/oder 13 und/oder 14 und/oder 15 kann bei jeder Anhängekupplung (1) eingesetzt werden, die ein Kupplungsgehäuse (2), einen Bedienhebel (3) und eine beliebig schwenkbar gelagerte Kugelschale (13) aufweist. Eine solche Anhängekupplung (1) kann ggf. auch einen im Kupplungsgehäuse (2) verschieblich gelagerten Schließbolzen (9) haben, mit dem der Sicherungshebel (26) zusammenwirken kann. Beides ist jedoch nicht zwingend.

### BEZUGSZEICHENLISTE

- 1: Anhängekupplung
- 2: Kupplungsgehäuse
- 3: Bedienhebel, Kupplungshebel
- 4: Hebellager
- 5: Feder
- 6: Mitnehmer, Langloch
- 7: Sperrklinke
- 8: Verschleißanzeige
- 9: Schließbolzen
- 10: Bolzenführung an Gehäuse
- 11: Aufnahmeöffnung
- 12: Kugelkopf
- 13: Kugelschale
- 14: Schalenboden
- 15: Schalenarm
- 16: Frontwand
- 17: Freiraum
- 18: Mitnahmeanschlag
- 19: Mulde
- 20: Nachstellfläche
- 21: Sperrfläche
- 22: Anlagekontur Öffnungsstellung
- 23: Abrundung
- 24: Lageröffnung
- 25: Lagerstift
- 26: Sicherungshebel
- 27: Auslöser
- 28: Einrastanzeige
- 29: Bolzenaufnahme, Rastöffnung
- 30: Lageröffnung
- 31: Hebelarm längs
- 32: Hebelarm quer
- 33: Feder
- 34: Konturenabschnitt, Anschlagbereich
- 35: Konturenabschnitt, Schalenbereich
- 36: Übergang, Rundkante

- M: sicherndes Moment
- F: resultierende Normalkraft
- x: Distanz

## Patentansprüche

1. Anhängekupplung mit einem Kupplungsgehäuse (2), einem Bedienhebel (3), einem im Kupplungsgehäuse (2) verschieblich gelagerten Schließbolzen (9), einer schwenkbar gelagerten Kugelschale (13) und einem schwenkbar gelagerten und mit dem Schließbolzen (9) zusammenwirkenden Sicherungshebel (26), wobei der Sicherungshebel (26) mit dem Schließbolzen (9) zusammenwirkt und diesen bei geöffneter Anhängekupplung (1) blockiert, und wobei die Kugelschale (13) ausgebildet ist, beim korrekten Ankuppeln an einem Kugelkopf von diesem sicher mitgenommen und in eine für den Schließ- und Verriegelungseingriff vorgesehene Drehstellung gebracht zu werden, in der eine Beaufschlagung und Zugspannung
durch den von dem Bedienhebel (3) bewegten Schließbolzen erfolgen kann, **dadurch gekennzeichnet, dass** die Kugelschale (13) in Öffnungsstellung der Anhängekupplung (1) frei und unabhängig vom Sicherungshebel (26) und vom Schließbolzen (9) schwenkbar ist.

2. Anhängekupplung nach Anspruch 1, **dadurch gekennzeichnet, dass** die Kugelschale (13) am rückwärtigen Stirnende eine gebogene Anlagekontur (22) für eine lösbare Anlage am Schließbolzen (9) in Öffnungsstellung aufweist.

3. Anhängekupplung nach Anspruch 2, **dadurch gekennzeichnet, dass** die Anlagekontur (22) einen unteren Anschlagbereich (34) aufweist, der in Öffnungsstellung den Sicherungshebel (26) untergreift und die Öffnungsbewegung begrenzt.

4. Anhängekupplung nach Anspruch 2 oder 3, **dadurch gekennzeichnet, dass** die Anlagekontur (22) einen oberen Schalenbereich (35) aufweist, der an die zugewandte Kontur des Schließbolzens (9) angepasst ist.

5. Anhängekupplung nach einem der Ansprüche 2 bis 4, **dadurch gekennzeichnet, dass** in Öffnungsstellung der Sicherungshebel (26) am rückwärtigen Stirnende den Schließbolzen (9) abstützt und dabei vom oberen Schalenbereich (35) der Anlagekontur (22) distanziert.

6. Anhängekupplung nach einem der Ansprüche 2 bis 5, **dadurch gekennzeichnet, dass** in Öffnungsstellung bei einem Ausfall des Sicherungshebels (26) der obere Schalenbereich (35) der Anlagekontur (22) den Schließbolzen (9) bereichsweise formschlüssig umgreift und abstützt sowie ein die Öffnungsstellung sicherndes Stützmoment (M) entwickelt.

7. Anhängekupplung nach einem der vorhergehenden Ansprüche, **dadurch gekennzeichnet, dass** die Kugelschale (13) eine Frontwand (16) mit einer Mulde (19) und einem darüber angeordneten Mitnahmeanschlag (18) für einen Kugelkopf (12) aufweist.

8. Anhängekupplung nach einem der vorhergehenden Ansprüche, **dadurch gekennzeichnet, dass** die Kugelschale (13) am rückwärtigen Endbereich eine oder mehrere obere Zuspann- und Nachstellflächen (20) für die Anlage am Schließbolzen (9) in Schließstellung und am rückwärtigen Endbereich eine obere Sperrfläche (21) für die Anlage am Schließbolzen (9) in Teil-Öffnungsstellung aufweist.

9. Anhängekupplung nach einem der vorhergehenden Ansprüche, **dadurch gekennzeichnet, dass** die Kugelschale (13) am Schalenboden (14) eine konvexe Abrundung (23) aufweist.

10. Anhängekupplung nach einem der vorhergehenden Ansprüche, **dadurch gekennzeichnet, dass** die Kugelschale (13) eine Gabelform mit einer Frontwand (16), einem über eine Teillänge reichenden Schalenboden (14) und beidseitigen Schalenarmen (15) aufweist, die einen Freiraum (17) umschließen.

11. Anhängekupplung nach einem der vorhergehenden Ansprüche, **dadurch gekennzeichnet, dass** der Sicherungshebel (26) am rückwärtigen Ende eine formschlüssige und selbstverriegelnde Bolzenaufnahme (29) und am vorderen Ende einen Auslöser (27) aufweist.

12. Anhängekupplung nach Anspruch 11, **dadurch gekennzeichnet, dass** die Bolzenaufnahme (29) eine schalenförmig gebogene und an den Schließbolzen (9) angepasste Form aufweist, die bei Eingriff ein die Öffnungsstellung sicherndes Stützmoment (M) entwickelt.

13. Anhängekupplung nach einem der vorhergehenden Ansprüche, **dadurch gekennzeichnet, dass** der Sicherungshebel (26) eine Einrastanzeige (28) aufweist.

14. Anhängekupplung nach einem der vorhergehenden Ansprüche, **dadurch gekennzeichnet, dass** der Sicherungshebel (26) U-förmig ausgebildet ist und einen quer vor der Kugelschale (13) angeordneten Hebelarm (32) sowie längs gerichtete und beidseits außen an der Kugelschale (13) vorbei greifende Hebelarme (31) aufweist.

15. Anhängekupplung nach einem der Ansprüche 1 bis 13, **dadurch gekennzeichnet, dass** der Sicherungshebel (26) stangenförmig ausgebildet und im Freiraum (17) der Kugelschale (13) angeordnet ist, wobei er durch oder über die Frontwand (16) der Kugelschale (13) greift.

## Claims

1. Tow bar having a coupling housing (2), an operating lever (3), a closing pin (9) which is mounted displaceably in the coupling housing (2), a pivotably mounted ball socket (13) and a pivotably mounted securing lever (26) which interacts with the closing pin (9), wherein the securing lever (26) interacts with the closing pin (9) and blocks the latter when the tow bar (1) is open, and wherein the ball socket (13) is designed to be securely carried along by a ball head, when correctly coupled thereto, and to be brought into a rotational position which is provided for the closing and locking engagement and in which the closing pin, which is moved by the operating lever (3), can be acted upon and applied, **characterized in that** the ball socket (13) is free in the opening position of the tow bar (1) and is pivotable independently of the securing lever (26) and of the closing pin (9).

2. Tow bar according to Claim 1, **characterized in that** the ball socket (13) has, at the rear end, a curved bearing contour (22) for releasable bearing against the closing pin (9) in the opening position.

3. Tow bar according to Claim 2, **characterized in that** the bearing contour (22) has a lower stop region (34) which, in the opening position, engages under the securing lever (26) and limits the opening movement.

4. Tow bar according to Claim 2 or 3, **characterized in that** the bearing contour (22) has an upper socket region (35) which is adapted to the facing contour of the closing pin (9).

5. Tow bar according to one of Claims 2 to 4, **characterized in that**, in the opening position, the securing lever (26), at the rear end, supports the closing pin (9) and in the process spaces the latter from the upper socket region (35) of the bearing contour (22).

6. Tow bar according to one of Claims 2 to 5, **characterized in that**, in the opening position, in the event of failure of the securing lever (26), the upper socket region (35) of the bearing contour (22) engages around the closing pin (9) in a form-fitting manner in regions and supports same and also produces a supporting torque (M) securing the opening position.

7. Tow bar according to one of the preceding claims, **characterized in that** the ball socket (13) has a front wall (16) with a trough (19) and with a carry-along stop (18), which is arranged above the latter, for a ball head (12).

8. Tow bar according to one of the preceding claims, **characterized in that** the ball socket (13) has, at the rear end region, one or more upper application and readjustment surfaces (20) for bearing against the closing pin (9) in the closed position and, at the rear end region, has an upper locking surface (21) for bearing against the closing pin (9) in the partial opening position.

9. Tow bar according to one of the preceding claims, **characterized in that** the ball socket (13) has a convex rounding (23) on the socket base (14).

10. Tow bar according to one of the preceding claims, **characterized in that** the ball socket (13) has a fork shape with a front wall (16), a socket base (14) reaching over a partial length and socket arms (15) on both sides which enclose a clearance (17) .

11. Tow bar according to one of the preceding claims, **characterized in that** the securing lever (26) has, at the rear end, a form-fitting and self-locking pin receptacle (29) and, at the front end, a trigger (27).

12. Tow bar according to Claim 11, **characterized in that** the pin receptacle (29) has a shape which is bent in the form of a socket, is adapted to the closing pin (9) and, upon engagement, produces a supporting torque (M) securing the opening position.

13. Tow bar according to one of the preceding claims, **characterized in that** the securing lever (26) has a latching indicator (28).

14. Tow bar according to one of the preceding claims, **characterized in that** the securing lever (26) is of U-shape design and has a lever arm (32) arranged transversely in front of the ball socket (13), and also longitudinally directed lever arms (31) which grip on both sides past the outside of the ball socket (13).

15. Tow bar according to one of Claims 1 to 13, **characterized in that** the securing lever (26) is of rod-shape design and is arranged in the clearance (17) of the ball socket (13), wherein said securing lever (26) reaches through or over the front wall (16) of the ball socket (13).

## Revendications

1. Attelage comprenant un boîtier d'accouplement (2), un levier de commande (3), un boulon de fermeture (9) supporté de manière déplaçable dans le boîtier d'accouplement (2), une coque sphérique (13) supportée de manière pivotante et un levier de fixation (26) supporté de manière pivotante et coopérant avec le boulon de fermeture (9), le levier de fixation (26) coopérant avec le boulon de fermeture (9) et bloquant celui-ci lorsque l'attelage (1) est ouvert, et la coque sphérique (13), lors d'un attelage correct à une rotule sphérique, étant réalisée de manière à être entraînée de manière sûre par cette dernière et à être amenée dans une position de rotation prévue pour l'engagement de fermeture et de verrouillage, dans laquelle une sollicitation et une contrainte de traction peuvent être effectuées par le boulon de fermeture déplacé par le levier de commande (3), **caractérisé en ce que** la coque sphérique (13), dans la position d'ouverture de l'attelage (1), peut pivoter librement et indépendamment du levier de fixation (26) et du boulon de fermeture (9).

2. Attelage selon la revendication 1, **caractérisé en ce que** la coque sphérique (13) présente, au niveau de l'extrémité frontale arrière, un contour d'appui courbe (22) pour un appui détachable sur le boulon de fermeture (9) dans la position d'ouverture.

3. Attelage selon la revendication 2, **caractérisé en ce que** le contour d'appui (22) présente une région de butée inférieure (34) qui, dans la position d'ouverture, vient en prise par le dessous avec le levier de fixation (26) et limite le mouvement d'ouverture.

4. Attelage selon la revendication 2 ou 3, **caractérisé en ce que** le contour d'appui (22) présente une région de coque supérieure (35) qui est adaptée au contour du boulon de fermeture (9) tourné vers elle.

5. Attelage selon l'une quelconque des revendications 2 à 4, **caractérisé en ce que** dans la position d'ouverture, le levier de fixation (26) s'appuie au niveau de l'extrémité frontale arrière sur le boulon de fermeture (9) et est en l'occurrence espacé de la région de coque supérieure (35) du contour d'appui (22).

6. Attelage selon l'une quelconque des revendications 2 à 5, **caractérisé en ce que** dans la position d'ouverture, en cas de défaillance du levier de fixation (26), la région de coque supérieure (35) du contour d'appui (22) vient en prise par engagement par correspondance de formes en partie autour du boulon de fermeture (9) et le supporte, et développe un couple de support (M) fixant la position d'ouverture.

7. Attelage selon l'une quelconque des revendications précédentes, **caractérisé en ce que** la coque sphérique (13) présente une paroi avant (16) avec une cavité (19) et une butée d'entraînement (18) disposée par-dessus celle-ci pour une tête de rotule (12).

8. Attelage selon l'une quelconque des revendications précédentes, **caractérisé en ce que** la coque sphérique (13) présente au niveau de la région d'extrémité arrière, une ou plusieurs surfaces de serrage et de réglage supérieures (20) pour l'appui contre le boulon de fermeture (9) dans la position de fermeture, et au niveau de la région d'extrémité arrière, une surface de blocage supérieure (21) pour l'appui contre le boulon de fermeture (9) dans la position d'ouverture partielle.

9. Attelage selon l'une quelconque des revendications précédentes, **caractérisé en ce que** la coque sphérique (13) présente, au niveau du fond de coque (14), un arrondissement convexe (23).

10. Attelage selon l'une quelconque des revendications précédentes, **caractérisé en ce que** la coque sphérique (13) présente une forme fourchue avec une paroi avant (16), un fond de coque (14) s'étendant sur une longueur partielle et des bras de coque (15) des deux côtés, qui entourent un espace libre (17).

11. Attelage selon l'une quelconque des revendications précédentes, **caractérisé en ce que** le levier de fixation (26) présente, au niveau de l'extrémité arrière, un logement de boulon par engagement par correspondance de formes et à auto-verrouillage (29), et à l'extrémité avant, un dispositif de déclenchement (27).

12. Attelage selon la revendication 11, **caractérisé en ce que** le logement de boulon (29) présente une forme cintrée en forme de coque et adaptée au boulon de fermeture (9), qui, lors de l'engagement, développe un couple de support (M) fixant la position d'ouverture.

13. Attelage selon l'une quelconque des revendications précédentes, **caractérisé en ce que** le levier de fixation (26) présente une indication d'encliquetage (28).

14. Attelage selon l'une quelconque des revendications précédentes, **caractérisé en ce que** le levier de fixation (26) est réalisé en forme de U et présente un bras de levier (32) disposé transversalement devant la coque sphérique (13) ainsi que des bras de levier (31) orientés longitudinalement et s'engageant des deux côtés à l'extérieur devant la coque sphérique (13).

15. Attelage selon l'une quelconque des revendications 1 à 13, **caractérisé en ce que** le levier de fixation (26) est réalisé en forme de barre et est disposé dans l'espace libre (17) de la coque sphérique (13), en venant en prise à travers ou par-dessus la paroi avant (16) de la coque sphérique (13).
